# EUROPÄISCHE PATENTSCHRIFT

(11) **EP 0 737 503 B1**
(45) Veröffentlichungstag und Bekanntmachung des Hinweises auf die Patenterteilung: **21.02.2001**
(21) Anmeldenummer: 96104833.7
(22) Anmeldetag: 27.03.1996
(51) Int. Cl.: B01D 46/24, B01D 27/14

(54) **Filterelement**
Filter element
Elément de filtre

(30) Priorität: 13.04.1995 DE 19514025
(43) Veröffentlichungstag der Anmeldung: 16.10.1996
(73) Patentinhaber: FILTERWERK MANN & HUMMEL GMBH, 71631 Ludwigsburg (DE)
(72) Erfinder: Erdmannsdörfer, Hans, 75335 Dobel (DE); Sommer, Bruno, 71636 Ludwigsburg (DE)
(74) Vertreter: Voth, Gerhard, Dipl.-Ing.

(56) Entgegenhaltungen:
- WO-A-88/06058
- GB-A- 2 007 992
- GB-A- 2 217 622
- US-A- 4 156 601

## Beschreibung

Die Erfindung betrifft ein Filterelement. Derartige Filterelemente sind bekannt, z. B. in der GB-Patentanmeldung 2 217 622. Die US-Patentanmeldung 4156601 offenbart ein Filterelement, welches ein erstes Rohr, dessen äußere Mantelfläche von einer Nonwoven-Schicht umgeben ist, und ein zweites Rohr, dessen äußere Mantelfläche von einer Garnwicklung und mehreren Lagen Filterpapier umgeben ist, aufweist, wobei eine Hülse mit einem Reißverschluß die Garnwicklung und die Lagen Papier an das zweite Rohr befestigt. Will man derartige Filterelemente z. B. zum Abscheiden von Flüssigkeiten verwenden, so ist daran nachteilig, daß z. B. der Abscheidegrad nicht ausreichend ist. Man könnte nun die Oberfläche vergrößern. Dies würde aber entweder zu einer Vergrößerung der Bauhöhe oder zu einem Anwachsen des Druckverlustes führen. Es ist somit Aufgabe der Erfindung, ein Filterelement der eingangs genannten Art dahingehend zu verbessern, daß ein klebstofffreies, nach Gebrauch leicht in seine Einzelteile zerlegbares Filterelement entsteht, das bei hohem Abscheidegrad einen niedrigen Druckverlust aufweist.

Erfindungsgemäß wird diese Aufgabe dadurch gelöst, daß das Filterelement ein erstes und ein zweites Rohr aufweist, wobei die äußere Mantelfläche des ersten Rohres von einer Nonwoven-Schicht umgeben ist und das zweite Rohr das erste Rohr umgibt, wobei das zweite Rohr an seiner äußeren Mantelfläche eine Garnwicklung und/oder wenigstens zwei Lagen Filterpapier als Papierwickel aufweist und daß ein Schrumpfschlauch die Garnwicklung und/oder den Papierwickel an das zweite Rohr anpreßt.

Bei der Abscheidung z. B. von Öl aus Luft stellt die Garnwicklung einen relativ großen Anteil an Oberfläche zur Verfügung. Der in der Garnwicklung entstehende Druckverlust ist dabei vergleichsweise niedrig. Die Fixierung mittels Schrumpfschlauch an das Rohr erspart den für die Aufbereitung problematischen Klebstoff. Die Kombination von Vlies und Garnwickel garantiert ein Optimum an Abscheidung bei geringem Druckverlust.

Eine vorteilhafte Weiterbildung der Erfindung sieht vor, daß die Nonwoven-Schicht länger ist als das erste Rohr. Dies garantiert, daß im montierten Zustand die Enden der Nonwoven-Schicht gestaucht sind und auf diese Weise z. B. Falschluftströme vermieden werden können.

Weiterhin kann man vorteilhafterweise vorsehen, daß das erste und/oder zweite Rohr an ihren Enden Bereiche aufweisen, die in radialer Richtung undurchlässig sind. Dies garantiert im montierten Zustand, daß Falschluftströme vermieden werden.

Vorteilhafte Weiterbildungen ergeben sich aus den restlichen Unteransprüchen.

Diese und weitere Merkmale von bevorzugten Weiterbildungen der Erfindung gehen außer aus den Ansprüchen auch aus der Beschreibung und den Zeichnungen hervor.

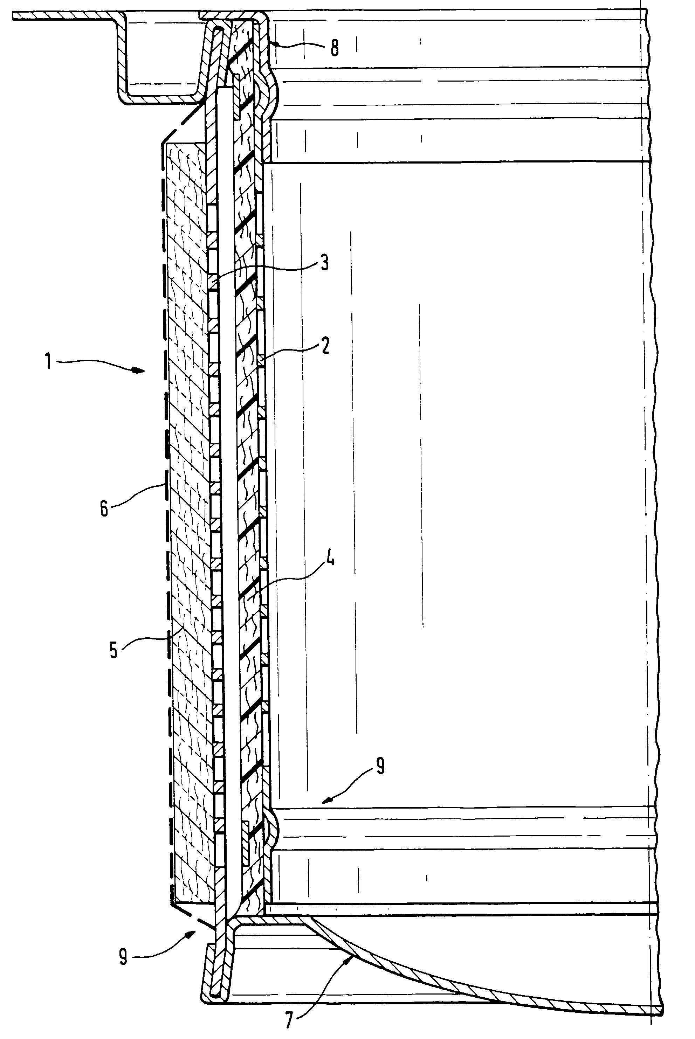

- Figur 1: zeigt einen Schnitt durch ein Ausführungsbeispiel.

Das Filterelement 1 besteht aus einem ersten Rohr 2 und einem zweiten Rohr 3. Das erste Rohr 2 ist von einer Nonwoven-Schicht 4, z. B. einem Polyestervlies ummantelt. Das zweite Rohr 3 weist eine digitale Garnwicklung 5, z. B. aus Glasfasergarn auf. Die Garnwicklung 5 wird mittels eines durchlässigen Schrumpfschlauches 6 am zweiten Rohr 3 fixiert. Das Rohr 2 samt dem es umgebenden Vlies steckt konzentrisch im Rohr 3. Das im Rohr 2 befindliche Vlies ist in axialer Richtung länger als das Rohr 2, so daß im montierten Zustand keine Falschluft ungefiltert zur Reinseite dringen kann. Im Gehäuse ist das an sich lose Rohr 2 dann mittels Deckel 7 und Flansch 8 verspannt. Die beiden Rohre 2, 3 bestehen aus Lochblech. An ihren Enden befinden sich lochfreie Bereiche 9, die für einen falschluftfreien Betrieb des Filterelements 1 sorgen.

### Bezugszeichenliste

- 1: Filterelement
- 2: erstes Rohr
- 3: zweites Rohr
- 4: Nonwoven-Schicht
- 5: Garnwicklung
- 6: Schrumpfschlauch
- 7: Deckel
- 8: Flansch
- 9: Bereiche radialer Undurchlässigkeit

## Patentansprüche

1. Filterelement, welches ein erstes und ein zweites Rohr (2, 3) aufweist, wobei die äußere Mantelfläche des ersten Rohres (2) von einer Nonwoven-Schicht (4) umgeben ist und das zweite Rohr (3) das erste Rohr (2) umgibt, wobei das zweite Rohr (3) an seiner äußeren Mantelfläche eine Garnwicklung (5) und/oder wenigstens zwei Lagen Filterpapier als Papierwickel aufweist dadurch gekennzeichnet daß ein Schrumpfschlauch (6) die Garnwicklung (5) und/oder den Papierwickel an das zweite Rohr (3) anpreßt.

2. Filterelement nach Anspruch 1, dadurch gekennzeichnet, daß die Nonwoven-Schicht (4) in axialer Richtung länger ist als das erste Rohr (2).

3. Filterelement nach einem oder mehreren der vorgenannten Ansprüche, dadurch gekennzeichnet, daß das Filterelement (1) einen Deckel (7) aufweist.

4. Filterelement nach einem oder mehreren der vorgenannten Ansprüche, dadurch gekennzeichnet, daß das Filterelement (1) einen Flansch (8) aufweist.

5. Filterelement nach einem oder mehreren der vorgenannten Ansprüche, dadurch gekennzeichnet, daß das erste Mittelrohr in radialer Richtung permeabel ist.

6. Filterelement nach einem oder mehreren der vorgenannten Ansprüche, dadurch gekennzeichnet, daß das zweite Mittelrohr in radialer Richtung permeabel ist.

7. Filterelement nach einem oder mehreren der vorgenannten Ansprüche, dadurch gekennzeichnet, daß die Garnwicklung (5) und/oder das Filterpapier aus Glasfasern und/oder Kunststoff-Mikrofasern besteht.

8. Filterelement nach einem oder mehreren der vorgenannten Ansprüche, dadurch gekennzeichnet, daß die Nonwoven-Schicht (4) aus einem Polyestervlies besteht.

9. Filterelement nach einem oder mehreren der vorgenannten Ansprüche, dadurch gekennzeichnet, daß das erste und/oder das zweite Rohr (2, 3) an seinen Enden Bereiche (9) aufweist, die in radialer Richtung undurchlässig sind.

## Claims

1. Filter element, which includes a first tube (2) and a second tube (3), the outer surface of the first tube (2) being surrounded by a non-woven layer (4), and the second tube (3) surrounding the first tube (2), the second tube (3) having a coil of thread (5) and/or at least two plies of filter paper as the roll of paper, characterised in that a shrinkable hose (6) presses the coil of thread (5) and/or the roll of paper against the second tube (3).

2. Filter element according to claim 1, characterised in that the non-woven layer (4) is longer than the first tube (2) in the axial direction.

3. Filter element according to one or more of the above-mentioned claims, characterised in that the filter element (1) includes a cover (7).

4. Filter element according to one or more of the above-mentioned claims, characterised in that the filter element (1) includes a flange (8).

5. Filter element according to one or more of the above-mentioned claims, characterised in that the first central tube is permeable in the radial direction.

6. Filter element according to one or more of the above-mentioned claims, characterised in that the second central tube is permeable in the radial direction.

7. Filter element according to one or more of the above-mentioned claims, characterised in that the coil of thread (5) and/or the filter paper are/is formed from glass fibres and/or plastics material microfibres.

8. Filter element according to one or more of the above-mentioned claims, characterised in that the non-woven layer (4) is formed from a polyester web.

9. Filter element according to one or more of the above-mentioned claims, characterised in that the first tube (2) and/or the second tube (3) include/includes regions (9), which are impermeable in the radial direction, at their/its ends.

## Revendications

1. Elément de filtre comportant deux tubes (2, 3) dont le premier tube (2) a sa surface externe entourée par une couche de non-tissé (4), tandis que le second tube (3) entoure le premier tube (2) et porte sur sa surface externe un enroulement de fibres (5) et/ou au moins deux couches de papier filtrant enroulées,
caractérisé en ce qu'
un manchon rétrécissable (6) applique l'enroulement de fibres (5) et/ou l'enroulement de papier sur le second tube (3).

2. Elément de filtre selon la revendication 1,
caractérisé en ce que
la couche de non-tissé (4) est, en direction axiale, plus longue que le premier tube (2).

3. Elément de filtre selon l'une ou plusieurs des revendications précédentes,
caractérisé en ce que
l'élément de filtre (1) est muni d'un couvercle (7).

4. Elément de filtre selon l'une ou plusieurs des revendications précédentes,
caractérisé en ce que
l'élément de filtre (1) présente une bride (8).

5. Elément de filtre selon l'une ou plusieurs des revendications précédentes,
caractérisé en ce que
le premier tube est perméable en direction radiale.

6. Elément de filtre selon l'une ou plusieurs des revendications précédentes,
caractérisé en ce que
le second tube est perméable en direction radiale.

7. Elément de filtre selon l'une ou plusieurs des revendications précédentes,
caractérisé en ce que
l'enroulement de fibres (5) et/ou le papier filtrant est composé de fibres de verre et/ou de microfibres de matière plastique.

8. Elément de filtre selon une ou plusieurs des revendications précédentes,
caractérisé en ce que
la couche de non-tissé (4) est un voile en polyester.

9. Elément de filtre selon l'une ou plusieurs des revendications précédentes,
caractérisé en ce que
le premier et/ou le second tube (2, 3) présente, à ses extrémités (9), des zones imperméables en direction radiale.
